## Europäisches Patentamt
## European Patent Office
## Office européen des brevets

(11) Publication number: **0 186 984**
**B1**

(12) **EUROPEAN PATENT SPECIFICATION**

(45) Date of publication of patent specification: **14.06.89**

(51) Int. Cl.⁴: **F 16 F 9/46,** B 60 G 17/00

(21) Application number: **85308890.4**

(22) Date of filing: **06.12.85**

(54) Hydraulic damper.

(30) Priority: **24.12.84 US 685460**

(43) Date of publication of application:
**09.07.86 Bulletin 86/28**

(45) Publication of the grant of the patent:
**14.06.89 Bulletin 89/24**

(84) Designated Contracting States:
**DE FR GB IT**

(56) References cited:
**DE-A-2 911 768**
**GB-A-2 120 355**
**US-A-4 183 509**

(73) Proprietor: **GENERAL MOTORS CORPORATION
General Motors Building 3044 West Grand
Boulevard
Detroit Michigan 48202 (US)**

(72) Inventor: **Spisak, Andrew Michael
8051 Glenwood Avenue
Youngstown Ohio 44512 (US)**
Inventor: **Adduci, Robert Louis
1612 Shannon Road
Girard Ohio 44420 (US)**

(74) Representative: **Denton, Michael John et al
Patent Section - Luton Office (F6) Vauxhall
Motors Limited P.O. Box 3 Kimpton Road
Luton Bedfordshire LU2 0SY (GB)**

Courier Press, Leamington Spa, England.

## Description

This invention relates to a hydraulic damper as specified in the preamble of claim 1, for example as disclosed in DE-A-2 911 768.

Prior to the present invention, various types of hydraulic shock absorber and strut units have had operator-controlled variable damping capability to provide the vehicle operator with a selective ride to suit road conditions or meet operator requirements. Although such suspension units have provided ride control, they generally require bulky external electrical or mechanical actuators, control systems and cable routings which do not meet current standards for compactness and high-precision control.

The present invention is utilized in the context of a hydraulic damper, in the form of a suspension strut or a shock absorber, having an electrically energizable motor or like actuator that is disposed internally of a hollow piston rod and is arranged to be selectively activated to precisely control and vary flow control orificing of the piston which strokes in an oil-filled cylinder tube to damp suspension spring action. Preferably an insulated bulkhead and fluid seal connects internally to the actuator and extends upwardly to a connector socket having cables that extend through an upper seal seated on the upper end of the piston rod. In this context, the present invention is particularly concerned with the provision of a device on the end of the piston rod to ensure that the internal electrical connections are made, the device further having the potential to provide a low profile while protecting and guiding the electrical cables of a wire harness leading from a control system.

To this end, a hydraulic damper in accordance with the present invention is characterised by the features specified in the characterising portion of claim 1.

In a preferred arrangement in accordance with the present invention, the said device is in the form of a dress cap that is a one-piece moulded plastics unit having interior and exterior connections to the top end of the hollow piston rod of the damper so that it is positively locked thereon when properly installed. When locked in place, the dress cap positions and maintains the location of the electrical terminals, insulator bulkhead and seal inside the hollow piston rod. If improperly installed, the dress cap self-rejects from the open end of the piston rod. Furthermore, the dress cap maintains its profile below the top of the strut when fully mated and provides protection for the cables so that no damage will occur during installation.

The dress cap further provides improved cable dress for a damper and protects and secures the cables after assembly to withstand forces from a wide range of vibration and shock occurring during vehicle operation.

The dress cap is preferably pre-assembled as part of a wire harness for ease of handling and to prevent loss of parts.

Precise assembly and removal of the dress cap with respect to the hollow piston rod is readily accomplished, usually without tools, even in relatively inaccessible locations.

The dress cap has potentially long service life in a harsh engine compartment environment and protects the hollow piston rod from the intrusion of moisture or foreign matter.

The invention thereby makes available a hydraulic damper having a new and improved low-profile cable dress cap which is capable of installation on the outer end of a hollow piston rod of a suspension damper, and which guides and protects electrical cables leading into an internal electric motor or like actuator within the damper, while also providing a sealing plug with positive locking features for releasable connection to the upper end of the rod.

Such a cable dress cap can be positively and releasably mounted to a hollow piston rod for the electrical cables leading into an internal electrically energizable motor or like actuator within the damper so that the outer configuration of the suspension strut or shock absorber is not materially changed.

In the drawings:

Figure 1 is a side elevational view with parts in section of a suspension strut illustrating a preferred embodiment of the present invention;

Figure 2 is a top plan view of Figure 1 on the lines 2--2 of Figure 1;

Figure 3 is an enlarged view partially in section of the upper portion of the suspension strut of Figure 1;

Figure 4 is a cross-sectional view with parts in elevation, of an electrical wiring dress cap on the line 4--4 of Figure 3;

Figure 5 is a sectional view on the line 5--5 of Figure 4, showing the dress cap assembly mounted to the piston rod of the strut; and

Figure 6 is an exploded isometric view of the dress cap and the electrical connection to an actuator within the strut.

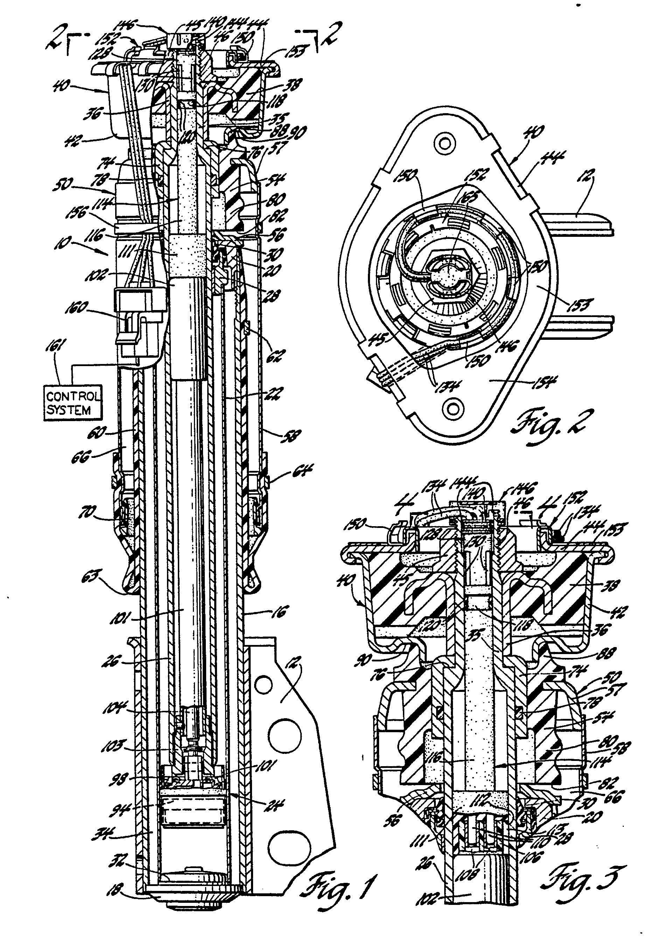

With reference now to the drawings, there is shown in Figure 1 a suspension strut 10 having a bracket 12 at its lower end adapted to be secured to a vehicle road wheel assembly, not illustrated. More particularly, the strut comprises a hydraulic damper with an elongate outer reservoir tube 16 closed by a lower end cap 18 and secured within a pocket provided by the bracket 12. The reservoir tube 16 extends upwardly from the bracket to a terminal end cap (seal cover) 20 welded to the upper end of the reservoir tube. The strut contains an elongate oil-filled cylinder tube 22 which is spaced inwardly from and concentric with the reservoir tube 16 and in which a piston assembly 24 with adjustable valving is mounted for stroking movements. A hollow piston rod 26 attached at its inner end to the piston assembly 24 extends upwardly therefrom through a rod guide 28 mounted on the upper end of the cylinder tube 22 and held in position by the end cap 20.

An annular elastomeric seal 30 is mounted in the rod guide 28 and has annular sealing contact with the piston rod 26 to prevent loss of hydraulic shock absorber oil from the unit as the piston strokes in the cylinder tube during damping operation. A base valve 32 secured to the lower end of the cylinder tube controls the flow of shock absorber oil between the cylinder tube and a fluid reservoir 34 formed between the cylinder tube and the reservoir tube on compression and rebound strokes of the piston for damping action of the suspension spring provided by this unit. The hollow piston rod 26 has a reduced-diameter upper end 35 which carries a metallic connector 36 with an upper flange that is embedded in a toroidal elastomeric isolator cushion 38 of an upper mount assembly 40. This cushion 38 has a low spring rate to dissipate vibratory energy which would otherwise enter the vehicle from the piston assembly 24 as it reciprocates in the cylinder tube to damp suspension spring action. A metallic shell or housing 42 and cover plate 44 partially enclose the isolator cushion 38, as shown in Figure 1. A nut 45 is threaded on to the reduced-diameter and correspondingly threaded upper end 46 of the hollow piston rod 26 to secure the upper mount assembly to the piston rod. Threaded fasteners, not shown, conventionally secure the upper mount assembly to the sheet metal of a mounting tower or other support formed in the body of the vehicle.

A compliant cover plate assembly 50 including a cylindrical jounce bumper 54 of a suitable elastomeric material is secured to an upper end of the hollow piston rod 26 immediately below the upper mount assembly 40. In jounce, this bumper is contacted and deflected by a bumper plate 56 that is welded to the top of the end cap 20 of the hydraulic damper. The compliant cover plate assembly also includes a cup-shaped connector plate 57 of sheet metal having an inner diameter embedded in the jounce bumper and an outer diameter welded to the upper end of the cylindrical steel dust tube 58. The dust tube extends from upper attachment with the plate 57 down and around the reservoir tube in conventional manner.

The strut 10 has an air suspension spring provided by a cylindrical elastomeric air sleeve 60 having its inner, upper end connected to the upper end of the reservoir tube 16 by a constricted clamping ring 62. From this clamping ring the sleeve 60 follows downwardly around the outer periphery of the reservoir tube and is reversely curved intermediate the ends thereof to form a rolling lobe 63. From this lobe, the sleeve extends upwardly and around the lower end of the dust tube 58. A second clamping ring 64 similar to the clamping ring 62 is employed to secure the sleeve to the lower end of the dust tube in an airtight manner. The pneumatic chamber 66 formed by the dust tube, the reservoir tube, the elastomeric air sleeve and the compliant cover plate assembly is charged with pressurized air or other gas to provide a pneumatic suspension spring for vehicle suspension purposes. One system for controlling the pressure within the air spring may be based on the system disclosed in US-A-3 372 919.

Improved operation of the pneumatic suspension spring and extended service life of the elastomeric sleeve 60 result from the addition of an air sleeve guide 70 which is releasably attached to the lower end of the dust tube 58. This guide is a resilient wide torus (ring) of plastics material which has a smooth exterior surface and low-friction engagement with the elastomeric air sleeve 60 to reduce sleeve wear during operation of the strut. The ring-like guide is formed with a central external groove which fits into the outwardly flanged lower end of the dust tube, as shown in Figure 1.

The jounce bumper 54 is bonded at its internal diameter to a generally cylindrical steel insert (jounce bumper stop) 74 which fits over the shoulder 76 provided by the reduced-diameter upper end portion of the hollow piston rod 26. This insert (stop) 74 contacts the lower end of the connector 36 and has an inner annular groove therein which receives an elastomeric O-ring 78 that forms a static seal which sealingly engages the piston rod 26 to prevent air leakage past the jounce bumper. The jounce bumper 54 has a downwardly extending skirt 80 with convolutions that terminate in a lower annular end surface 82. On jounce, the bumper skirt 80 is deflected as the contact plate 56 engages the end surface 82 and moves towards the jounce bumper stop 74. Jounce movement is further retarded by the engagement of the end of the stop 74 with the plate 56. In addition to providing a jounce function, the cover plate assembly 50 forms a compliant upper end and seal for the air spring provided by the pressurized pneumatic chamber 66. A collar-like upper end 88 of the jounce bumper assembly 54 has an end surface that seats against the lower surface 90 of the metallic shell 42 of the upper mount assembly 40.

In this preferred construction, the piston rod 26 is connected to the isolator cushion 38 so that hydraulic forces generated by the piston as it strokes in the cylinder tube of the strut will be primarily routed to and dissipated by the isolator cushion 38, which preferably has a lower spring rate than that of the jounce bumper 54. This substantially reduces the transmittal of road shocks by the piston rod to the passenger compartment of the vehicle, so materially contributing to the comfort of the operator and the passengers therein. The suspension spring loads from the air sleeve will be carried through the higher spring rate jounce bumper 54 to the shell-like housing 42 of the upper mount assembly.

The piston assembly 24 provides selective damping rates and preferably has variable deflected-disc valving with flow control orifices therein whose flow size openings can be varied to control the damping characteristics of the strut. This variable-orifice construction is preferably like that disclosed in EP-A-174 119. Generally, this valving comprises an orifice plate 94 fixed in the piston shell with flow openings therethrough.

Mounted on top of this orifice plate is a selector plate 98 which is rotatable to any number of positions to control the size of the openings and the flow through the piston for deflection of discs mounted beneath the orifice plate, as described in the said EP-A-174 119. On compression, the fluid in the cylinder tube below the piston 24 will flow through outer restricted passages to force the orifice selector plate upwardly, so deflecting an upper wave spring 101. Fluid flowing into the cylinder tube above the piston is squeezed through the outer restricted passages to damp rebound or compression stroke, also as described in the said EP-A-174 119.

The rotational movement of the selector plate is controlled by an actuator 102 fixed at a predetermined position entirely within the hollow piston rod 26. A hollow connector tube 101 extends from the actuator 102 within the piston rod 26, and is pinned or otherwise connected to the upstanding neck portion 103 of the piston assembly 24 extending therein, as shown in Figure 1. With such connection, high-pressure damper fluid is present in the hollow piston rod, such that effective fluid sealing of the piston rod, preferably at the upper end thereof, is necessary. The actuator 102 has a rotatable output shaft 104 which extends through the connector tube 101 into driving connection with the rotatable selector plate 98 and is operative to rotate the selector plate to appropriate positions to control the rebound damping characteristics of the strut. The amount of selector plate rotation is a control function that can be manually selected by the operator or automatically selected by computer control in accordance with road conditions.

The upper end of the actuator 102 has a reduced-diameter end portion 106 which has four female terminals 108 for conducting electrical energy into the actuator 102 for operation thereof. The terminals 108 receive the male terminals 110 of a cylindrical support socket 111 formed at the lower end of an elongate insulated bulkhead 114. The socket 111 has a keyway 112 in the wall thereof which fits on a key 113 on the upper end of the actuator 102 to mechanically interlock the actuator to the bulkhead 114.

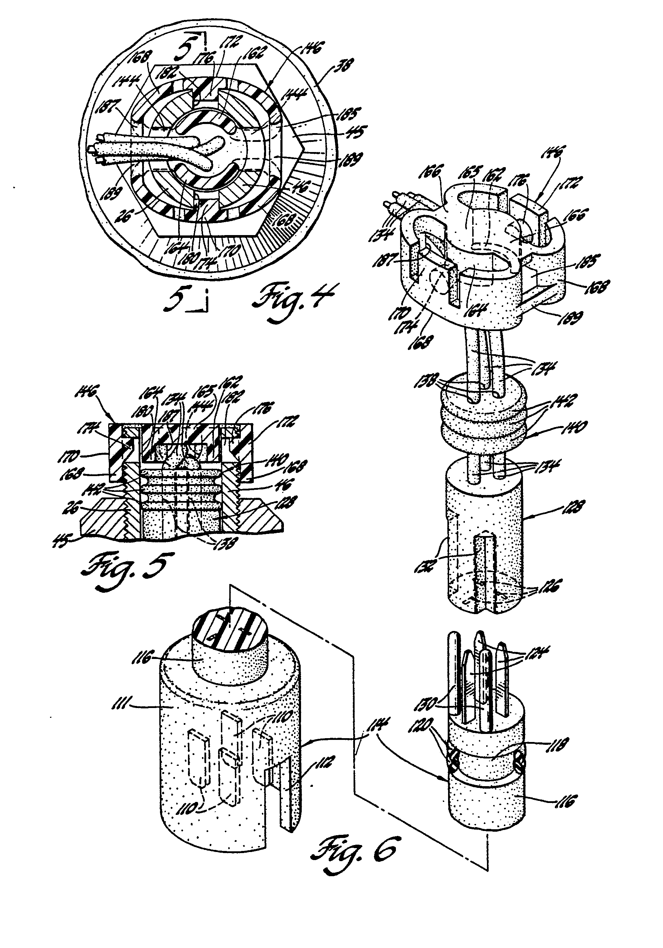

The bulkhead 114 is preferably moulded from glass-reinforced polyester material and is fully compatible with high-temperature damper oils and pressures and other internal environmental forces of the strut. From the plug end, the bulkhead 114 has an elongate stem 116 of a reduced diameter to fit into the reduced-diameter end 35 of the piston rod. The upper end of the stem 116 has an annular groove 118 which carries a pair of O-rings 120. These O-rings are sealingly engaged with the inner wall of the reduced-diameter end 35 of the hollow piston rod, to provide high-pressure sealing of the damper oil. There are three male terminals 124 which bus to the four lower terminals 110. The upper terminals 124 project towards the upper end of the piston rod, and fit into female terminals 126 of a cylindrical socket 128 that slip-fits in a plug-like fashion into the upper end of the piston rod, as shown in Figures 3 and 5. In addition to the terminals 124, the upper end of the strut bulkhead has a pair of steel, upwardly-projecting locator pins 130 that fit into longitudinally extending grooves 132 moulded into the peripheral surface of the socket 128. These pins interlock with and orient the socket 128 relative to the bulkhead 114, and ensure the electrical connection of these two parts, as is best illustrated in Figure 3.

The female terminals 126 are electrically connected to three electrical cables 134 that project upwardly therefrom through the top of the socket 128 and then through cable sealing holes 138 in an upper cylindrical seal 140. The seal 140 is moulded from a self-lubricating silicone material, and has a plurality of sealing ribs 142 which contact the inner diameter of the piston rod 26 to effectively block the entry of any moisture or any contaminants to the socket 128 and the hollow piston rod.

After passing through the cable sealing holes, the cables 134 are turned through one of a plurality of horizontally aligned groove-like U-shaped cuts 144 formed in the threaded upper end 46 of the piston rod 26. The cables are retained in this location by the installation of a dress cap (a cable dress cap) 146 which locks on the threaded upper end 46 of the piston rod 26 as will be later described. From the dress cap, the cables are circled on top of the cover plate 44 and are retained in such position by arcuately arranged tabs 150 of a cable retainer 152. As is shown in Figure 2, the cables lead under a sheet metal outer plate 153 tabbed to the cover plate 44 and extend downwardly along the dust tube 58 and under a retaining strap 156, fastened around the dust tube, to a terminal end plug 160. This plug 160 is operatively connected to a source of electrical energy and controls 161, which may comprise a computer control system, and in response to road signals received from such a computer control system the actuator 102 will be energized to rotate the output shaft 104 and thereby turn the selector plate of the valving within the shock absorber piston 24 to select a damping rate which matches road conditions automatically.

The dress cap 146 is moulded from nylon (polyamide) or other suitable plastics or like material, and has a pair of inner arcuate retainer walls 162, 164 which plug into and close the open threaded upper end 46 of the hollow piston rod 26. The walls 162, 164 extend downwardly from the circular centre of an upper bridge 165. The bridge has a pair of cable hold-down bars 166, which are of generally inverted U-shape as seen in cross-section, extending diametrically across the top of the cap to protect the cable. The cable is thus led radially from the circular centre to fit into the U-shaped cuts 144 in the threaded upper end portion 46 of the piston rod 26. The top of these bars 166 connects to an outer peripheral wall (skirt) 168 which has identical locking tabs 170, 172 integrally formed therein diametrically opposed to one another and disposed at an angle of 90° with respect to the hold-down bars 166. The locking tabs extend upwardly and are spring fingers that have inwardly extending locking projections 174, 176 which are formed on the upper ends thereof and releasably lock within diametrically opposed openings (keepers) 180, 182 in the piston rod. These openings 180, 182 are at right angles to the U-shaped cuts 144 through which the hold-down bars 166 and the cables 134 extend.

When the dress cap 146 is pressed into the positive-lock position, the seal 140 is forced downwardly so that the cylindrical socket 128 is fully engaged with the terminals of the insulated bulkhead 114. If the plug constituted by the cylindrical socket 128 is not properly connected or the seal 140 is not in a proper sealing position, the cap locking projections 174, 176 will not reach the openings 180, 182 and the cap will self-reject. The installer can then effect proper re-assembly of the plug and seal to lock the cap in place. The cables 134 pass through one of the opposing end openings 185, 187 provided by lower bars 189 interconnecting bottom portions of the skirt 168, as is seen in Figures 4 and 6. This secures the cap to a wiring harness comprising the plug 160, cables 134, cap 146, seal 138 and socket 128. With such wiring harness construction, assembly is facilitated, since all the wiring parts and the cap and seal are connected together and there are no loose pieces. This cap and other wiring harness components can readily be installed and removed without the use of tools. With the parts assembled and the wire-dress cap 146 held in the positive locked position against axial and rotational movement, the strut is effectively sealed. The dress cap 146 further protects against and blocks the entry of foreign material into the strut, whilst routing the cables to the wire retainer, as is best seen in Figure 2.

Thus the dress cap 146 provides guidance for the electric cables 134 of a wire harness and when fully installed on the upper end 46 of the hollow piston rod 26 ensures that the seal 140 is in its proper sealing position and that the plug-type socket 128 makes the necessary electrical connection with the terminals 124.

Overall, in the context of a hydraulic damper having a hollow piston rod containing an electric actuator, the dress cap, which potentially has a low profile, is effective to position and maintain terminals, connectors and fluid seals within the hollow piston rod while providing effective routing and protection of electrical cables leading to the internally mounted electric actuator.

**Claims**

1. A hydraulic damper for connection between sprung and unsprung portions of a wheeled vehicle to damp ride motions of the vehicle, in which a first tubular member (22) has a hydraulic fluid therein and is adapted to be operatively connected to one of the said portions of the vehicle, a piston (24) is operatively mounted in the first tubular member (22) and has damping control means (98) movable to selected positions therein to selectively vary and control the flow of fluid therethrough when stroking within the first tubular member (22), to control the damping characteristics of the damper, a hollow piston rod (26) is operatively connected to the piston (24) and extends upwardly through the end of the damper for connection to the other of the said portions of the vehicle, and actuator means (102) is operatively mounted within the hollow piston rod (26) for moving the damping control means (98) between the said selected positions thereof, the actuator means (102) being electrically energizable and selectively operable by control means (161) that is connected to supply electrical energy to the actuator means (102) by conductor means (134) which extend through the hollow piston rod (26), characterised in that the cables (134) are guided outwardly from the upper end (46) of the piston rod (26) by means of a dress cap (164) that is adapted to be affixed to the top end (46) of the hollow piston rod (26) and includes a central top portion (165) and a plurality of inner retainer portions (162, 164) extending downwardly therefrom which fit within the top end (46) of the piston rod (26), cable guiding bar means (166) extending outwardly of the central top portion (165), and an outer skirt portion (168) attached to the bar means (166) and disposed radially outwardly of the top end (46) of the piston rod (26), the outer skirt portion (168) having locking tab means (174, 176) thereon for engagement with complementary configurations (180, 182) in the top end (46) of the piston rod (26) to positively lock the dress cap (164) to the top end (46) of the piston rod (26).

2. A hydraulic damper according to claim 1, characterised in that the first tubular member (22) comprises a cylinder tube which is supported within an outer support tube (16) adapted to be operatively connected to one of the portions of the vehicle, the hollow piston rod (26) comprises a hollow cylindrical piston rod, the retainer portions (162, 164) of the dress cap (164) comprise a pair of arcuate retainer portions, a pair of grooves (144) are formed in the wall of the hollow piston rod (26) at the top end (46) thereof, the cable guiding bar means (166) comprises a pair of cable hold-down bars that extend radially outwardly from the central top portion (165) for locking into the grooves (144) for guiding the cables (134) to the actuator (102), the skirt portion (168) is carried by the ends of the bars radially outwardly of the retainer portions (162, 164) and the piston rod (26), and the locking tab means (174, 176) of the outer skirt portion (168) comprises a pair of locking tabs adapted to snap-lock into the complementary configurations (180, 182) in the hollow piston rod (26) to prevent rotation of the outer skirt portion (168) or axial removal thereof from the hollow piston rod (26).

3. A hydraulic damper according to claim 1 or 2, characterised in that an upper cylindrical seal (140) of resilient material is deflectable to closely fit into the upper end (46) of the hollow piston rod (26) immediately below the retainer portions (162, 164) of the dress cap (146), the cylindrical seal (140) has a plurality of cable-receiving holes (138) therethrough through which the cables (134) extend, the cylindrical seal (140) has sealing means (142) on the periphery thereof for sealing engagement with the inner wall surface of the hollow piston rod (26), and the dress cap (146) is releasably fixed to the hollow piston rod (26) to position the cylindrical seal (140) and to close the end of the hollow piston rod (26) and guide the cables (134) outwardly from the upper end (46) of the piston rod (26).

4. A hydraulic damper according to any one of claims 1 to 3, characterised in that the hollow piston rod (26) has a cylindrical passage extending axially therein and operatively connected to the piston (24), the dress cap (146) is adapted to be releasably locked to the open end (46) of the hollow piston rod (26), and the complementary configurations (180, 182) in the hollow piston rod (26) comprise a pair of keeper openings for engagement by the locking tab means (174, 176) to positively lock the dress cap (146) to the top end (46) of the hollow piston rod (26).

5. A hydraulic damper according to any one of claims 1 to 4, characterised in that the locking tab means (174, 176) comprise spring-like fingers which are formed on opposite sides of the skirt portion (168) and have radial projections (174, 176) thereon for engaging the complementary configurations (180, 182) in the hollow piston rod (26) to prevent axial and rotational movement of the dress cap (146) relative to the piston rod (26).

**Patentansprüche**

1. Hydraulischer Stoßdämpfer zum Anbringen zwischen gefederten und ungefederten Abschnitten eines Radfahrzeuges zur Dämpfung von Fahrbewegungen des Fahrzeuges, bei dem ein erstes rohrförmiges Glied (22) Hydraulikfluid enthält und zur wirksamen Verbindung mit einem der Abschnitte des Fahrzeugs ausgelegt ist, ein Kolben (24) wirksam in dem ersten rohrförmigen Glied (22) befestigt ist und Dämpfungs-Steuermittel (98) besitzt, die zu ausgewählten Stellungen darin bewegbar sind, um wahlweise die dort bei Hubbewegung innerhalb des ersten rohrförmigen Gliedes (22) hindurchgehende Fluidströmung zu ändern und zu steuern, um die Dämpfungseigenschaften des Stoßdämpfers zu steuern, eine hohle Kolbenstange (26) wirksam mit dem Kolben (24) verbunden ist und sich nach oben durch das Ende des Stoßdämpfers zur Verbindung mit dem anderen Abschnitt des Fahrzeuges erstreckt, und Betätigungsmittel (102) wirksam innerhalb der hohlen Kolbenstange (26) angebracht ist, um das Dämpfungs-Steuermittel (98) zwischen den ausgewählten Stellungen desselben zu bewegen, das Betätigungsmittel (102) elektrisch beaufschlagbar und wahlweise durch Steuermittel (161) betätigbar ist, das zur Zuführung elektrischer Energie zu dem Betätigungsmittel (102) über Leitermittel (134) angeschlossen ist, welches sich durch die hohle Kolbenstange (26) erstreckt, dadurch gekennzeichnet, daß die Leiter (134) vom oberen Ende (46) der Kolbenstange (26) mittels einer zur Befestigung an dem oberen Ende (46) der hohlen Kolbenstange (26) ausgelegten Zierkappe (146) nach außen geleitet sind, die einen zentralen Deckabschnitt (165) und eine Vielzahl von inneren Halterabschnitten (162, 164) enthält, welche sich von dort nach unten erstrecken und in das obere Ende (46) der Kolbenstange (26) passen, wobei sich Leitungsführungs-Stabmittel (166) vom zentralen Deckabschnitt (165) nach außen erstrecken und ein äußerer Schurzabschnitt (168) an dem Stabmittel (166) befestigt und radial außerhalb des oberen Endes (46) der Kolbenstange (26) angeordnet ist, der äußere Schurzabschnitt (168) daran befindliche Sperrfahnenmittel (174, 176) zum Eingriff mit komplementären Gestaltungen (180, 182) im oberen Ende (46) der Kolbenstange (26) besitzt, um die Zierkappe (146) formschlüssig mit dem oberen Ende (46) der Kolbenstange (26) zu verriegeln.

2. Hydraulischer Stoßdämpfer nach Anspruch 1, dadurch gekennzeichnet, daß das erste rohrförmige Glied (22) ein Zylinderrohr umfaßt, das in einem äußeren Stützrohr (16) abgestützt ist, welches zur wirksamen Verbindung mit einem der Abschnitte des Fahrzeugs ausgelegt ist, daß die hohle Kolbenstange (26) eine hohlzylindrische Kolbenstange umfaßt, daß die Halterabschnitte (162, 164) der Zierkappe (146) ein Paar gebogene Halterabschnitte umfassen, daß ein Paar Nuten (144) in der Wand der hohlen Kolbenstange (46) an deren oberem Ende (46) ausgebildet ist, daß das Leitungsführungs-Stabmittel (166) ein Paar von Leitungsniederhalte-Stäben umfaßt, die von dem zentralen Deckabschnitt (165) radial nach außen abstehen zum Einrasten in die Nuten (144), um die Leitungen (134) zu dem Betätiger (102) zu führen, daß der Schurzabschnitt (168) durch die Enden der Stäbe radial außerhalb der Halterabschnitte (162, 164) und der Kolbenstange (26) getragen ist, und daß das Sperrfahnenmittel (174, 176) des äußeren Schurzabschnittes (168) ein Paar von Sperrfahnen umfaßt, die zur Einschnapp-Verriegelung in die komplementären Gestaltungen (180, 182) in der hohlen Kolbenstange (26) ausgelegt sind, um Verdrehung des äußeren Schurzabschnittes (168) oder eine axiale Entfernung desselben von der hohlen Kolbenstange (26) zu verhindern.

3. Hydraulischer Stoßdämpfer nach Anspruch 1 oder 2, dadurch gekennzeichnet, daß eine obere Zylinderdichtung (140) aus elastischem Material abbiegbar ist zur engen Passung in das obere Ende (46) der hohlen Kolbenstange (26) unmittelbar unter den Halterabschnitten (162, 164) der Zierkappe (146), daß die Zylinderdichtung (140) eine Vielzahl von Leitungsaufnahme-Durchgangsöffnungen (138) besitzt, durch welche sich die Leitungen (134) erstrecken, daß die Zylinderdichtung (140) an ihrem Umfang Dichtmittel (142) besitzt zum Dichteingriff mit der Innenwandfläche der hohlen Kolbenstange (26), und daß die Zierkappe (146) lösbar an der hohlen Kolbenstange (26) befestigt ist, um die Zylinderdichtung (140) zu positionieren und das Ende der hohlen Kolbenstange (46) abzuschließen und die Leitungen (134) vom oberen Ende (46) der Kolbenstange (26) nach außen zu führen.

4. Hydraulischer Stoßdämpfer nach einem der Ansprüche 1 bis 3, dadurch gekennzeichnet, daß die hohle Kolbenstange (26) einen sich in ihr axial erstreckenden zylindrischen Durchlaß besitzt, der wirksam mit dem Kolben (24) verbunden ist, daß die Zierkappe (146) zur lösbaren Verriegelung mit dem offenen Ende (46) der hohlen Kolbenstange (26) ausgelegt ist und daß die komplementären Gestaltungen (180, 182) in der hohlen Kolbenstange (26) ein Paar von Halteröffnungen zum Eingriff durch die Sperrfahnen-Mittel (174, 176) umfassen zur Formschlußverriegelung der Zierkappe (146) an dem oberen Ende (46) der hohlen Kolbenstange (26).

5. Hydraulischer Stoßdämpfer nach einem der Ansprüche 1 bis 4, dadurch gekennzeichnet, daß das Sperrfahnen-Mittel (174, 176) federartige Finger umfaßt, die an einander gegenüberliegenden Seiten des Schurzabschnittes (168) ausgebildet sind und radiale Vorsprünge (174, 176) daran besitzen zum Eingriff mit den komplementären Gestaltungen (180, 182) in der hohlen Kolbenstange (26), um Axial- und Dreh-Bewegung der Zierkappe (146) bezüglich der Kolbenstange (26) zu verhindern.

## Revendications

1. Amortisseur hydraulique destiné à raccorder la partie suspendue et la partie non suspendue d'un véhicule à roues afin que les mouvements du véhicule pendant la conduite soient amortis, dans lequel un premier organe tubulaire (22) contient un fluide hydraulique et est destiné à être raccordé pendant le fonctionnement à l'une desdites parties du véhicule, un piston (24) est monté dans le premier organe tubulaire (22) et a un dispositif (98) de réglage d'amortissement mobile vers des positions choisies à l'intérieur afin que le débit de fluide à l'intérieur puisse être modifié et réglé sélectivement lors du déplacement en translation dans le premier organe tubulaire (22), afin que les caractéristiques d'amortissement de l'amortisseur soient réglées, une tige creuse (26) de piston est raccordée au piston (24) et dépasse au-dessus de celui-ci par l'extrémité de l'amortisseur afin qu'elle soit raccordée à l'autre desdites parties du véhicule, et un dispositif de manoeuvre (102) est monté dans la tige creuse (26) du piston afin qu'il déplace le dispositif (98) de réglage d'amortissement entre des positions choisies de celui-ci, le dispositif de manoeuvre (102) étant destiné à être excité électriquement et à être commandé sélectivement par le dispositif de réglage (161) qui est relié, afin qu'il transmette de l'énergie électrique, au dispositif de manoeuvre (102) par un dispositif conducteur (134) passant dans la tige creuse (26) du piston, caractérisé en ce que les câbles (134) sont guidés vers l'extérieur à partir de l'extrémité supérieure (46) de la tige (26) du piston par un capuchon de recouvrement (164) qui est destiné à être fixé à l'extrémité supérieure (46) de la tige creuse (26) du piston, et qui comporte une partie supérieure centrale (165) et plusieurs parties internes de retenue (162, 164) dépassant vers le bas de la partie supérieure et s'ajustant dans l'extrémité supérieure (46) de la tige de piston (26), des barres (166) de guidage de câbles dépassant à l'extérieur de la partie supérieure centrale (165), et une partie externe de jupe (168) fixée aux barres (166) et disposée radialement vers l'extérieur de l'extrémité supérieure (46) de la tige de piston (26), la partie externe de jupe (168) ayant des pattes de blocage (174, 176) destinées à coopérer avec des configurations complémentaires (180, 182) de l'extrémité supérieure (46) de la tige de piston (26), afin que le capuchon de recouvrement (164) soit bloqué sur l'extrémité supérieure (46) de la tige de piston (26).

2. Amortisseur hydraulique selon la revendication 1, caractérisé en ce que le premier organe tubulaire (22) comporte un tube cylindrique qui est supporté dans un tube externe (16) de support destiné à être raccordé lors du fonctionnement à l'une desdites parties du véhicule, la tige creuse (26) de piston comporte une tige cylindrique creuse de piston, les parties de retenue (162, 164) du capuchon de recouvrement (164) comportent deux parties courbes de retenue, une paire de gorges (144) est formée dans la paroi de la tige creuse (26) du cylindre à l'extrémité supérieure (46) de celle-ci, les barres (166) de guidage de câbles comportent deux barres d'appui de câbles qui dépassent radialement vers l'extérieur de la partie supérieure centrale (165) afin qu'elles se bloquent dans les gorges (144) de guidage des câbles (134) vers l'organe de manoeuvre (102), la partie de jupe (168) est portée par les extrémités des barres radialement vers l'extérieur des parties de retenue (162, 164) et de la tige de piston (26), et les pattes de blocage (174, 176) de la partie externe de jupe (168) comportent une paire de pattes de blocage destinée à s'enclencher élastiquement dans les configurations complémentaires (180, 182) formées dans la tige creuse du piston (26), afin que la partie externe de jupe (168) ne puisse pas tourner ou ne puisse pas être retirée axialement de la tige creuse de piston (26).

3. Amortisseur hydraulique selon la revendication 1 ou 2, caractérisé en ce qu'un joint cylindrique supérieur d'étanchéité (140) formé d'un matériau élastique peut fléchir afin qu'il se loge intimement à l'extrémité supérieure (46) de la tige creuse de piston (26) juste au-dessous des parties de retenue (162, 164) du capuchon de recouvrement (146), le joint cylindrique d'étanchéité (140) a plusieurs trous (138) de passage de câbles qui le traversent et dans lesquels sont placés les câbles (134), le joint cylindrique d'étanchéité (140) comporte un dispositif d'étanchéité (142) à sa périphérie, destiné à coopérer de manière étanche avec la surface de paroi interne de la tige creuse (26) de piston, et le capuchon de recouvrement (146) est fixé temporairement à la tige creuse (26) de piston afin que le joint cylindrique (140) soit positionné et que l'extrémité de la tige creuse (26) du piston soit fermée et guide les câbles (134) vers l'extérieur de l'extrémité supérieure (46) de la tige de piston (26).

4. Amortisseur hydraulique selon l'une quelconque des revendications 1 à 3, caractérisé en ce que la tige creuse de piston (26) a un passage cylindrique qui y est formé axialement et qui est raccordé au piston (24), le capuchon de recouvrement (146) est destiné à être bloqué temporairement sur l'extrémité supérieure (46) de la tige creuse de piston (26), et les configurations complémentaires (180, 182) formées dans la tige creuse (26) du piston comportent deux ouvertures de maintien destinées à coopérer avec les pattes de blocage (174, 176) afin que le capuchon de recouvrement (146) soit bloqué positivement sur l'extrémité supérieure (46) de la tige creuse (26) de piston.

5. Amortisseur hydraulique selon l'une quelconque des revendications 1 à 4, caractérisé en ce que les pattes de blocage (174, 176) comportent des doigts élastiques qui sont formés sur les côtés opposés de la partie de jupe (168) et ont des saillies radiales (174, 176) destinées à coopérer avec les configurations complémentaires (180, 182) formées dans la tige creuse (26) de piston, afin que le capuchon de recouvrement (146) ne puisse pas se déplacer axialement et en rotation par rapport à la tige de piston (26).

EP  0 186 984  B1

CONTROL
SYSTEM

Fig. 1

Fig. 2

Fig. 3

1

Fig. 4

Fig. 5

Fig. 6